# EUROPÄISCHE PATENTANMELDUNG

(11) **EP 0 965 425 A2**
(43) Veröffentlichungstag der Anmeldung: **22.12.1999**
(21) Anmeldenummer: 99109488.9
(22) Anmeldetag: 12.05.1999
(51) Int. Cl.: B29C 44/14

(54) **Verfahren zur Herstellung von dekorierten Kunststoffteilen**

(30) Priorität: 18.06.1998 DE 19827192
(71) Anmelder: Volkswagen Aktiengesellschaft, 38436 Wolfsburg (DE)
(72) Erfinder: Wiesner, Artur, 38442 Wolfsburg (DE)

(57) **Zusammenfassung**

Es wird unter anderem ein Verfahren zur Herstellung von dekorierten Kunststoffteilen bereitgestellt, das durch folgende Schritte gekennzeichnet ist:
- Tiefziehen mindestens eines Dekors, insbesondere Kunststoff-Folie, und Anbringen der Folie an einem Negativ-Tiefzieh-Werkzeug (1) einer Vorrichtung oder gleichzeitiges Anbringen und Tiefziehen der Folie an dem Negativ-Tiefzieh-Werkzeug (1) der Vorrichtung und
- Hinterschäumung der Folie am Negativ-Tiefzieh-Werkzeug (1) mit einem Schäum-Werkzeug (2) der Vorrichtung.

## Beschreibung

Die Erfindung betrifft ein Verfahren zur Herstellung von dekorierten Kunststoffteilen, also von mit einer Folie bzw. Stoff überzogenen Kunststoffteilen.

Des weiteren betrifft die Erfindung eine Vorrichtung zur Herstellung von dekorierten Kunststoffteilen.

Ferner betrifft die Erfindung Kunststoffteile und Fahrzeuge.

Schließlich betrifft die Erfindung ein Verfahren zur Herstellung von Fahrzeugen, insbesondere von Personenkraftwagen, oder von Karosserien, insbesondere von Pkw-Karosserien, durch Zusammensetzen von Bauteilen.

Zur Herstellung von dekorierten Kunststoffteilen, insbesondere in der Automobilbranche, werden üblicherweise zunächst die Kunststoffteile in der gewünschten Form hergestellt und anschließend mit einer Folie bzw. Stoff kaschiert und somit dekoriert. Nachteilig hierbei ist, daß das Aufbringen von der Folie auf das Kunststoffteil häufig nicht die gewünschten Qualitätsansprüche an Haptik und Optik erfüllt.

Weiterhin besteht die Möglichkeit (siehe EP-0477476 B1), ein Dekor zunächst in einer Vorrichtung tiefzuziehen und diese anschließend in einer weiteren Vorrichtung zu hinterschäumen oder ein Dekor in einer Form herzustellen und diese dann in die Endform umzuformen. Nachteilig hieran sind der relativ hohe Zeitaufwand und die auch hier nicht immer befriedigenden Ergebnisse bezüglich Haptik und Optik.

Aus dem vorgenannten ergibt sich das Problem, mit Hilfe eines neuen Verfahrens und einer neuen Vorrichtung die Probleme aus dem Stand der Technik wenigstens teilweise zu vermeiden, insbesondere bezüglich Haptik und Optik höherwertigere Kunststoffteile bei gleichzeitig verringertem Herstellungszeitaufwand bereitzustellen.

Dieses Problem wird erfindungsgemäß durch ein Verfahren nach Anspruch 1 und ein Verfahren nach Anspruch 6, eine Vorrichtung nach Anspruch 3, eine Verwendung nach Anspruch 2, ein Kunststoffteil nach Anspruch 4 und ein Fahrzeug nach Anspruch 5 gelöst.

Beim erfindungsgemäßen Verfahren wird zunächst eine Folie in eine gewünschte Form tiefgezogen. Dies kann nach konventionellen Methoden durchgeführt werden, beispielsweise durch Fixierung der Folie auf einem Vorblaskasten bei gleichzeitiger Erwärmung und Aufbringen auf einen Vakuum-Tiefziehstempel, der die gewünschte Kunststoff-Geometrie als Positivform enthält. Danach wird die Folie an einem Negativ-Tiefzieh-Werkzeug angebracht. Es ist jedoch auch denkbar (bei gering verformten Teilen), daß das Tiefziehen und Anbringen direkt an der Negativ-Tiefzieh-Form ohne Positivstempel durchgeführt wird. Schließlich wird die Folie am Negativ-Tiefzieh-Werkzeug mit einem Schäum-Werkzeug hinterschäumt. Erfindungswesentlich ist, daß bei diesem Verfahren beim Formschluß der Positivform mit der Negativform die tiefgezogene Folie in die Negativ-Tiefzieh-Form ohne weiteres Überführen gebracht wird und dadurch nach Abkoppeln der Positivform die Folie an der Negativ-Tiefzieh-Form haftet bzw. eine Positivform entfällt und somit Tiefziehen und Anhaften der Folie direkt an der Negativ-Tiefzieh-Form durchgeführt wird. Hierdurch werden unter Umständen unerwünschte auftretende Verformungen vermieden. Das Anhaften der Folie an die jeweiligen Formen wird durch Anlegen von Unterdruck/Vakuum bewerkstelligt.
In vorteilhafter Weise wird das Negativ-Tiefzieh-Werkzeug und/oder das Schäumwerkzeug während oder nach dem Tiefziehen in die Schäumposition gedreht, was eine effiziente Verfahrensweise ermöglicht. Bei entsprechender Kühlung der Folie kann durch Drehen und translatorischem Bewegen der beiden Werkzeuge zu einer geschlossenen Form bei anschließendem Hinterschäumen die Produktionsleistung auf relativ einfache Art und Weise erhöht werden.

Weiterhin ist es erfindungswesentlich, daß die Vorrichtung sowohl ein Negativ-Tiefzieh-Werkzeug als auch ein Schäumwerkzeug aufweist. Dadurch werden die üblichen mehrteiligen Werkzeuge eingespart, was mit einer erheblichen Kostenreduzierung verbunden ist.

Darüber hinaus ist es von Vorteil, wenn das Negativ-Tiefzieh-Werkzeug und/oder das Schäumwerkzeug in der Vorrichtung drehbar angeordnet ist, da somit eine relativ kompakte Vorrichtung bereitgestellt wird.

Die Verfahrensparameter wie Temperatur etc. entsprechen den konventionellen Verfahren.

Als Schäume werden hauptsächlich die üblichen Partikel- sowie Reaktionsschäume verwendet, als Folien beispielsweise Polyolefin-Folien.

Die erfindungsgemäß hergestellten folierten Kunststoffteile entsprechen den hohen Qualitätsanforderungen der Automobilindustrie, insbesondere bei Instrumenten-Trägertafeln.

Das nachfolgende Beispiel dient zur Erläuterung der Erfindung.

Es zeigen:

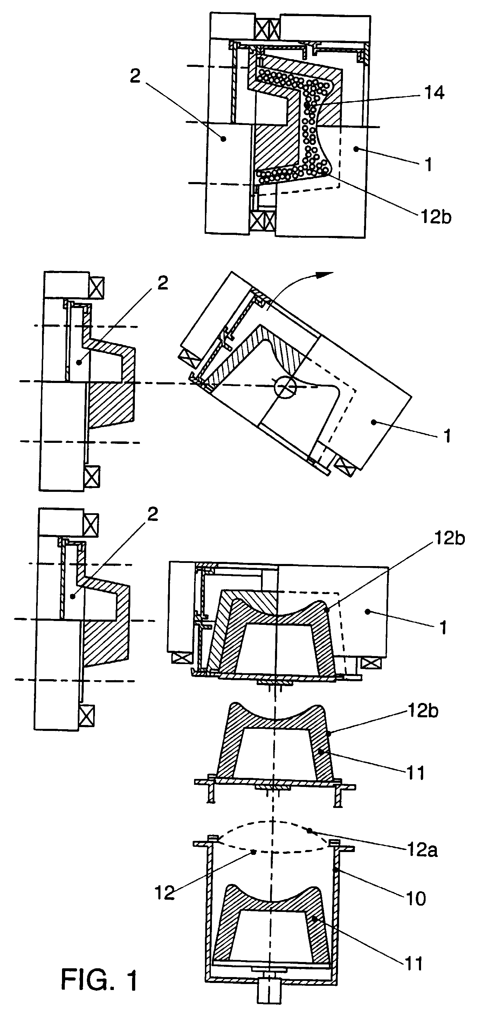

- Figur 1: eine beispielhafte Verfahrensablaufskizze.

In Figur 1 ist von unten nach oben die Durchführung des erfindungsgemäßen Verfahrens dargestellt.

Zunächst wird eine Folie 12 auf einem Vorblaskasten 10 eingespannt. Die Folie 12 wird vor dem Einspannen und/oder im eingespannten Zustand erhitzt. Das Erhitzen der Folie 12 erfolgt vorteilhaft mit Hilfe einer Infrarotheizung.

Zur Formgebung der Folie 12 ist in dem Vorblaskasten 10 bereits eine Positivform 11 angeordnet. Zuerst wird mit Stützluft die erwärmte Folie 12 nach außen 12a gedrückt und anschließend die Positivform 11 nach oben gegen die Folie 12a gefahren. Durch Anlegen eines Vakuums auf der Rückseite der Positivform 11 legt sich dann die Folie 12b über die Positivform 11. Anschließend wird die Positivform 11 in ein Negativ-Tiefzieh-Schäumwerkzeug 1 eingefahren, das durch Anlegen von Vakuum auf seiner Rückseite die Folie 12b übernimmt. Das Herauslösen der Positivform 11 wird unterstützt durch Anlegen eines Überdrucks auf deren Rückseite.

Das Negativ-Tiefzieh-Schäumwerkzeug 1 mit der innenliegenden Folie 12b wird danach in die gewünschte Schäumposition gedreht und mit einem Schäumwerkzeug 2 verschlossen. In den Hohlraum zwischen der Folie 12b und dem Schäumwerkzeug 2 werden blähbare Kunststoffkügelchen (beispielsweise Polypropylen) eingefüllt und durch Einbringen von Wasserdampf über das Schäumwerkzeug 2 zu einem Partikelschaum 14 gebläht. Beim Blähen wird gleichzeitig die Folie 12b nochmals erwärmt, so daß diese auf ihrer Oberfläche eine Narbung des Negativ-Tiefzieh-Schäumwerkezeugs übernimmt und sich fest mit dem Partikelschaum 14 verbindet.

Anschließend wird das Werkzeug gekühlt bis der Partikelschaum und die Folie sich genügend verfestigt haben und das fertig folierte Kunststoffteil entnommen.

## Patentansprüche

1. Verfahren zur Herstellung von dekorierten Kunststoffteilen, gekennzeichnet durch folgende Schritte:
- Tiefziehen mindestens eines Dekors, insbesondere Kunststoffolie, und Anbringen der Folie an einem Negativ-Tiefzieh-Werkzeug (1) einer Vorrichtung oder gleichzeitiges Anbringen und Tiefziehen der Folie an dem Negativ-Tiefzieh-Werkzeug (1) der Vorrichtung und
- Hinterschäumen der Folie am Negativ-Tiefzieh-Werkzeug (1) mit einem Schäum-Werkzeug (2) der Vorrichtung.

2. Verfahren nach Anspruch 1, dadurch gekennzeichnet, daß das Negativ-Tiefzieh-Werkzeug (1) und/oder das Schäumwerkzeug (2) während oder nach dem Tiefziehen in die Schäumposition gedreht wird.

3. Verwendung des Verfahrens nach Anspruch 1 oder 2 zur Herstellung von Kfz-Innenraum-Teilen, insbesondere von Kfz-Instrumenten-Trägertafeln.

4. Vorrichtung zur Herstellung von folierten Kunststoffteilen, dadurch gekennzeichnet, daß diese ein Negativ-Tiefzieh-Werkzeug (1) und ein Schäumwerkzeug (2) aufweist.

5. Vorrichtung nach Anspruch 4, dadurch gekennzeichnet, daß das Negativ-Tiefzieh-Werkzeug (1) und/oder das Schäumwerkzeug (2) in der Vorrichtung drehbar angeordnet ist.

6. Kunststoffteil, hergestellt nach einem Verfahren nach Anspruch 1 oder 2.

7. Fahrzeug, insbesondere Pkw, enthaltend mindestens ein Kunststoffteil nach Anspruch 6.

8. Verfahren zur Herstellung von Fahrzeugen, insbesondere von Pkws, oder von Karosserien, insbesondere von Pkw-Karosserien, durch Zusammensetzen von Bauteilen, dadurch gekennzeichnet, daß mindestens ein Kunststoffteil nach Anspruch 6 verwendet wird.
